# EUROPEAN PATENT APPLICATION

(11) **EP 3 771 555 A1**
(43) Date of publication of application: **03.02.2021**
(21) Application number: 19189039.1
(22) Date of filing: 30.07.2019
(51) Int. Cl.: B32B 5/18, B32B 7/12, B32B 27/06, B32B 27/38, B29C 65/48

(54) **LIGHT-WEIGHT SANDWICH STRUCTURE WITH FLAME-RETARDANT PROPERTY AND METHOD OF MAKING THE SAME**

(71) Applicant: Cytec Industries Inc., Princeton, NJ 08540 (US)
(72) Inventor: MORTARA, Stefano, 20020 ARCONATE (Mi) (IT); WOLOSON, Pete, Landenberg, Pennsylvania 19350 (US); TONIOLO, Paolo, IT-20020 CESATE, MILAN (MI) (IT); LENZI, Fiorenzo, 81041 Vitulazio (IT); VOGEL, Alexander, 3080 Tervuren (BE)
(74) Representative: Benvenuti, Federica

(57) **Abstract**

A lightweight, flame-retardant, multilayered composite structure having at least the following components: a thermoplastic foam core having two opposing surfaces; a thermoplastic adhesive film on at least one of the opposing surfaces of the foam core, one or more composite layer(s) on each adhesive film. The composite layer(s) is/are composed of reinforcement fibers embedded in a thermoplastic polymer or thermoset resin matrix. Adhesive bonding is effectuated by the interleaving thermoplastic adhesive film interposed between the thermoplastic foam core and the adjacent composite layer. The thermoplastic adhesive film is formed of a thermoplastic polymer composition having a T_{g} of at least 20°C lower than the T_{g} of the foam core material.

## Description

The present disclosure relates generally to light-weight composite materials having a thermoplastic foam layer, their application and methods for fabricating such structures.

### BRIEF DESCRIPTION OF THE DRAWINGS

FIG. 1 shows an exemplary sandwich structure with a thermoplastic foam core.
FIG. 2 illustrates an exemplary apparatus with a double-belt press system for manufacturing a sandwich structure.
FIG. 3 shows a polished image of the interface of a control sandwich panel taken at x100 magnification in dark field light, wherein the control sandwich panel was manufactured according to Example 1 disclosed herein.
FIG. 4 shows a polished image of the interface of another sandwich panel taken at x100 magnification in dark field light, wherein the sandwich panel was manufactured according to Example 2 disclosed herein.

### DETAILED DESCRIPTION

Composite sandwich structures having a thermoplastic foam core have been used in interior structures of an aircraft, such as cabin door and wall panels. Such sandwich structures provide strength and stiffness while minimizing the structures' weight. While interior composite parts of an aircraft do not require the structural performance of primary structures such as fuselage and wings, still they have their own set of demanding requirements, including stiffness and strength at low weight, dimensional stability, durable aesthetics, chemical resistance to cleaning solvents, and stringent flame-retardant standards in terms of flame, smoke and toxicity (FST) criteria and heat release rate (HRR) criteria.

Fabrication of multilayered composite structures composed of thermoplastic materials is difficult because high temperature and pressure are required to assure a good bonding of the various thermoplastic layers. One challenge presented by the manufacturing of a sandwich structure having a thermoplastic foam core between outer skin layers is the ability to obtain a good bonding between the core and skin layers without using high consolidating pressures, which would cause the foam core to collapse.

In a conventional process of bonding a honeycomb or foam core to outer skin layers, the entire sandwich panel assembly is advanced through a heating zone whereby the panel is heated to the bonding temperature while under pressure, typically, applied by heated press platens. If a thermoplastic core is used, the collapse or distortion of the core would occur if the temperature required for bonding exceeds the glass transition temperature (T_{g}) of the core material and if the pressure is too high. Such collapse or distortion is due to the combination of the excessive heat transfer from the press platens through the outer skins to the core, thus raising the temperature of the foam core beyond the Tg of the thermoplastic core material and the applied pressure by the press platens.

One aspect of the present disclosure is pertaining to a lightweight, flame-retardant, multilayered composite structure having at least the following components: a thermoplastic foam core having two opposing surfaces; a thermoplastic adhesive film on at least one of the opposing surfaces of the foam core, one or more composite layer(s) on each adhesive film. Adhesive bonding is effectuated by the interleaving thermoplastic adhesive film interposed between the thermoplastic foam core and the adjacent composite layer. The composite layer is composed of reinforcement fibers embedded in a thermoplastic polymer or thermoset resin matrix. The thermoplastic foam core is formed of a foamed thermoplastic material having a glass transition temperature (T_{g}) of at least 200°C, preferably 210 °C to 240 °C, as determined by Differential Scanning Calorimetry (DSC) at a heating rate of 5°C/min, and the thermoplastic adhesive film is formed of a thermoplastic polymer composition having a T_{g} of at least 20°C lower than the T_{g} of the foamed thermoplastic material.

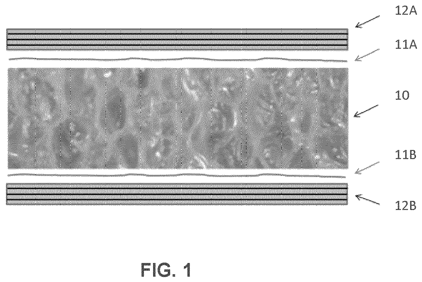

In a preferred embodiment, the multilayered composite structure is a sandwich structure in which the thermoplastic foam core is interposed between two outer skins in sheet form. **FIG. 1** shows an exemplary sandwich structure, which includes a thermoplastic foam core 10, interleaving adhesive films 11A and 11B, outer skins 12A and 12B, wherein each skin is composed of a laminate (or stack) of multiple composite layers or a single composite layer. The composite layers of the skins may be the same or different from each other.

In a preferred embodiment, the foam core and the skin materials in the sandwich structure are selected so that the structure is compliant with FAR/JAR/CS 23.853 'Passenger and crew compartment interiors' and 23.855 'Cargo and baggage compartment fire protection' flammability requirements for materials.

The selected thermoplastic adhesive used for bonding the thermoplastic foam core to the composite layer(s) provides excellent bonding in terms of adhesive fracture toughness and peel strength. Moreover, it was discovered that the use of an adhesive thermoplastic film having a glass transition temperature of about 20°C lower than that of the foam core material provides a sandwich structure that is compatible with a continuous, low pressure double-belt process, which allows for high production speed. Comparing to the conventional methods that require external heating source during lamination, the double-belt process does require such external heating source to melt the interleaving adhesive layer between the skins and the thermoplastic foam core. The heat transferred through the belt and the skin material to the underlying adhesive film is sufficient to melt the adhesive film, without causing the distortion of the skin or the collapse of the foam core.

### Thermoplastic Foam Core

In the context of the present disclosure, the term "foam" is used with the meaning commonly known to the person skilled in the art. With reference to IUPAC. Compendium of Chemical Terminology, 2nd ed. (the "Gold Book" Compiled by A. D. McNaught and A. Wilkinson. Blackwell Scientific Publications, Oxford 1997, XML on-line corrected version : http://goldbook.iupac.org (2006-) created by M. Nic, J. Jirat, B. Kosata; updates compiled by A. Jenkins. ISBN 0-9678550-9-8. doi:10.1351/goldbook), the term "foam" indicates a dispersion in which a large proportion of gas by volume, in the form of gas bubbles, is dispersed in a liquid, solid or gel. The diameter of the bubbles is usually larger than 1 µm, but the thickness of the lamellae between the bubbles is often in the usual colloidal size range.

As a non-limiting example, at least 50 % of the volume of the foamed thermoplastic material according to the present disclosure can be occupied by gas, for example at least 60 %, at least 70 %, at least 80 % or at least 90 %, based on the total volume of the composition.

The foam core may have a density of from 20 to 1000 kg/m³, from 30 to 800 kg/m³, from 35 to 500 kg/m³, from 40 to 300 kg/m³, or from 45 to 200 kg/m³. In a preferable embodiment the foam core has a density from 45 to 150 kg/m³ and more preferably from 45 to 80 kg/m³. The density can be measured according to ASTM D1622.

According to one embodiment, the foam core has an average cell size below 1000 µm, below 500 µm, below 300 µm or below 250 µm. The cell size can be measured using optical or scanning electron microscopy.

The foam core may have a thickness in the range of 3 mm to 50 mm, in some embodiments, in the range of 5mm to 25mm.

The foam core of the multilayered composite structure disclosed herein is formed from a foamable composition containing at least one polymer selected from: poly(aryl ether sulfone) (PAES), particularly, polyethersulphone (PES), polyetherethersulphone (PEES), poly(biphenyl ether sulfone) (PPSU); polyamide (PA); polyimide (PI); polyetherimide (PEI); and copolymers thereof. Generally, PAES polymers having T_{g} in the range of 201°C to 290°C are suitable for the purpose disclosed herein. In some embodiments, the foamable composition contains a combination of different thermoplastic polymers. The difference in T_{g} among various PAES polymers is due to the difference in the backbone structure of the polymers.

For the purpose of the present disclosure, a "poly(aryl ether sulfone) (PAES)" denotes any polymer of which at least 50 mol. % of the recurring units are recurring units (R_{PAES}) of formula (K), the mol.% being based on the total number of moles of recurring units in the polymer: 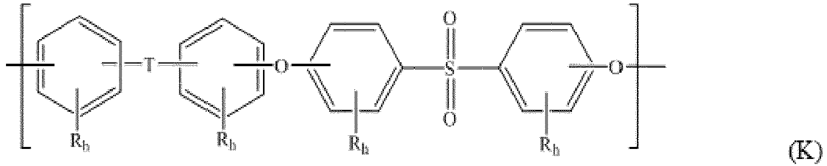 where
R, at each location, is independently selected from the group consisting of a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
h, for each R, is independently zero or an integer ranging from 1 to 4, and
T is selected from the group consisting of a bond, a sulfone group [-S(=O)₂₋], and a group-C(Rⱼ)(Rₖ)-, where Rⱼ and Rₖ, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium.

T is preferably a bond, a sulfone group or a group -C(Rⱼ)(Rₖ)- in which Rⱼ and Rₖ are preferably methyl groups.

Poly(biphenyl ether sulfone) (PPSU) is particularly suitable as the material for the foam core. For the purpose of the present disclosure, poly(biphenyl ether sulfone) polymer (PPSU) denotes any polymer containing at least 50 mol. % of recurring units (R_{PPSU}) of formula (K), the mol. % being based on the total number of moles in the polymer: 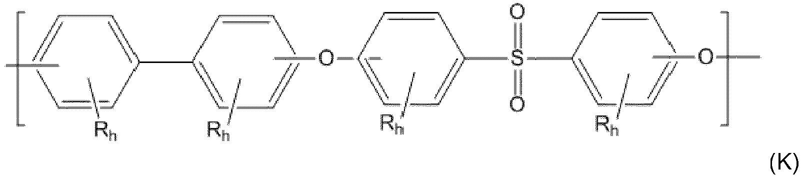 where
R, at each location, is independently selected from the group consisting of a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and
h, for each R, is independently zero or an integer ranging from 1 to 4 (for example 1, 2, 3 or 4).

According to an embodiment, R is, at each location in formula (K) above, independently selected from the group consisting of a C1-C12 moiety optionally comprising one or more than one heteroatoms; sulfonic acid and sulfonate groups; phosphonic acid and phosphonate groups; amine and quaternary ammonium groups.

According to an embodiment, h is zero for each R. In other words, according to this embodiment, the recurring units (R_{PPSU}) are units of formula (K'):

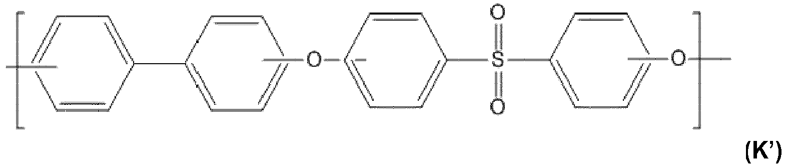

According to an embodiment, at least 60 mol. %, at least 70 mol. %, at least 80 mol. %, at least 90 mol. %, at least 95 mol. %, at least 99 mol. % or all of the recurring units in the PPSU are recurring units (R_{PPSU}) of formula (K) and/or formula (K').

According to an embodiment, the PPSU polymer contains at least 50 mol.% of recurring units (R_{PPSU}) of formula (L): 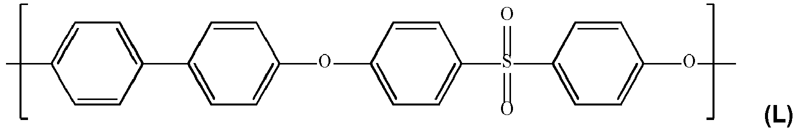 (the mol. % being based on the total number of moles in the polymer).

The PPSU polymer of the present disclosure can therefore be a homopolymer or a copolymer. If it is a copolymer, it can be a random, alternate or block copolymer.

According to a preferred embodiment, at least 60 mol. %, at least 70 mol. %, at least 80 mol. %, at least 90 mol. %, at least 95 mol. %, at least 99 mol. % or all of the recurring units in the PPSU are recurring units (R_{PPSU}) of formula (L).

When PPSU is a copolymer, its recurring units are a mix of recurring units (R_{PPSU}) described above and recurring units (R*) that are different from R_{PPSU}, such as units of formulas (M), (N) and/or (O) below: 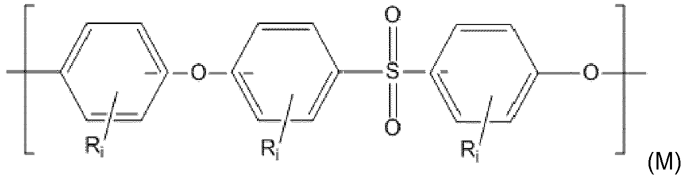 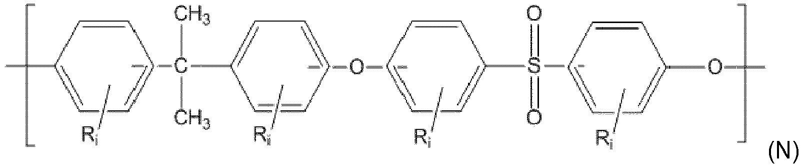 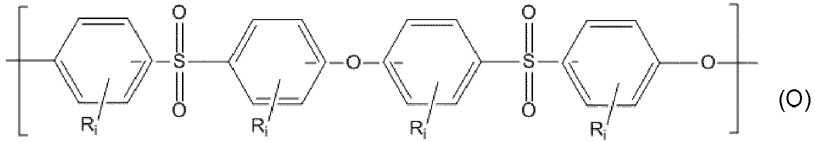 where
R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and
i, for each R, is independently zero or an integer ranging from 1 to 4 (for example 1, 2, 3 or 4).

According to an embodiment, R is, at each location in formulas (M) to (O) above, independently selected from the group consisting of a C1-C12 moiety optionally comprising one or more than one heteroatoms; sulfonic acid and sulfonate groups; phosphonic acid and phosphonate groups; amine and quaternary ammonium groups.

According to an embodiment, i is zero for each R of formulas (M), (N) or (O) and the recurring units R* are selected from formulas (M'), (N') and (O') below:

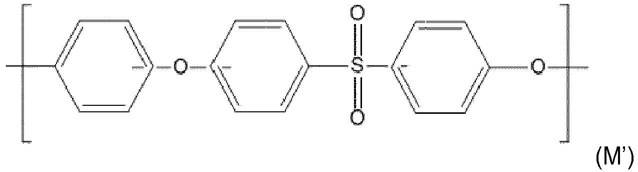

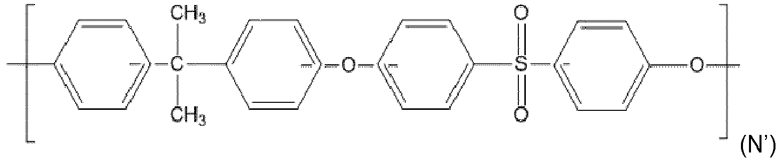

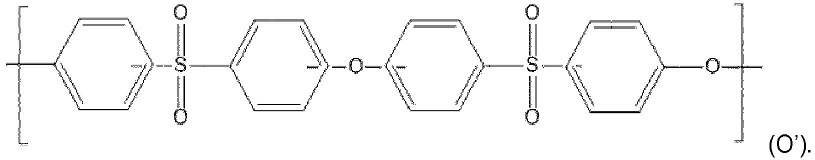

According to some embodiments, less than 40 mol. %, less than 30 mol. %, less than 20 mol. %, less than 10 mol. %, less than 5 mol. %, less than 1 mol. % or all of the recurring units in the PPSU are recurring units of formulas (M), (N), (O), (M'), (N') and/or (O').

According to one embodiment, the PPSU is a copolymer having a mix of recurring units (R_{PPSU}) described above and recurring units (R*) that are different from of R_{PPSU} where R* is selected from formulas (M"), (N") and (O") below:

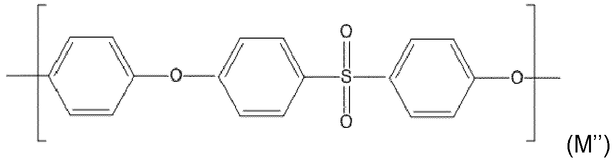

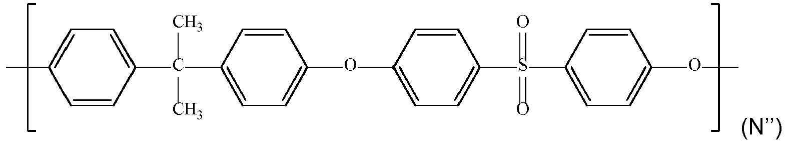

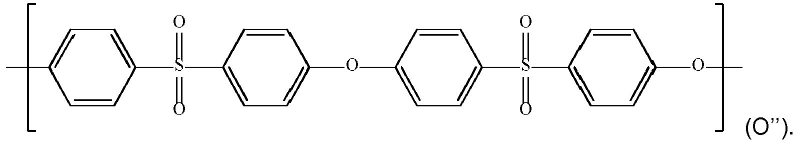

According to some embodiments, less than 45 mol. %, less than 40 mol. %, less than 35 mol. %, less than 30 mol. %, less than 20 mol. %, less than 10 mol. %, less than 5 mol. %, less than 1 mol. % or all of the recurring units in the PPSU are recurring units of formulas (M"), (N") and/or (O").

The PPSU for the purpose herein may be a blend of a PPSU homopolymer and at least one PPSU copolymer as described above.

The PPSU polymer disclosed herein can be prepared by any method known in the art. As an example, the PPSU polymer mat be a result from the condensation of 4,4'-dihydroxybiphenyl (biphenol) and 4,4'-dichlorodiphenyl sulfone. The reaction of monomer units takes place through nucleophilic aromatic substitution with the elimination of one unit of hydrogen halide as leaving group. It is to be noted, however, that the structure of the resulting poly(biphenyl ether sulfone) does not depend on the nature of the leaving group.

Defects, end groups and monomers' impurities may be incorporated in very minor amounts in the (co)polymer PPSU of the present disclosure, so as to advantageously not affecting negatively the performances of the same.

An example of a suitable PPSU for the purpose disclosed herein is the commercially available Radel® PPSU from Solvay Specialty Polymers USA, L.L.C.

In preferred embodiments, the thermoplastic foamed core is a foamed material having a T_{g} in the range of 210°C-240°C and is formed from a foamable composition containing poly(biphenyl ether sulfone) polymer (PPSU) as a major component, i.e., PPSU is present in an amount greater than 50 wt.% (weight percentage), or more than 80 wt.%, based on the total weight of the composition. The weight average molecular weight (Mw) of PPSU may be from 30,000 to 90,000 g/mol, for example, from 40,000 to 80,000 g/mol or from 50,000 to 70,000 g/mol.

The weight average molecular weight (Mw) of PAES, for example PPSU and PSU, can be determined by gel permeation chromatography (GPC) using methylene chloride as a mobile phase (2x 5µ mixed D columns with guard column from Agilent Technologies ; flow rate: 1.5 mL/min; injection volume: 20 µL of a 0.2w/v% sample solution), with polystyrene standards.

More precisely, the weight average molecular weight (Mw) of the PAES polymer can be measured by gel permeation chromatography (GPC), using methylene chloride as the mobile phase. The following detailed method can for example be used: two 5µ mixed D columns with guard column from Agilent Technologies are used for separation. An ultraviolet detector of 254nm is used to obtain the chromatogram. A flow rate of 1.5ml/min and injection volume of 20 µL of a 0.2w/v% solution in mobile phase are selected. Calibration is performed with 12 narrow molecular weight polystyrene standards (Peak molecular weight range: 371,000 to 580 g/mol).

In addition to the thermoplastic polymers, e.g., PAES, described above, the foamable composition for forming the foam core may further comprise up to 10 wt. % of at least one additive (AD), based on the total weight of the polymer composition. The additive may be selected from: nucleating agents, chemical foaming agents or residues of the same; UV absorbers; stabilizers such as light stabilizers and others; lubricants; plasticizers; pigments; dyes; colorants; anti-static agents; metal deactivators; and mixtures thereof.

Examples of antioxidants are phosphites, phosphorates, hindered phenols or mixtures thereof. Surfactants may also be added to help nucleate bubbles and stabilize them during the bubble growth phase of the foaming process.

In some embodiments, the foamable composition contains one or more nucleating agents. Nucleating agents help to control the foam structure by providing a site for bubble formation. Examples of nucleating agents are glass fibers, carbon fibers, graphite fibers, silicon carbide fibers, aramide fibers, wollastonite, talc, mica, clays, calcium carbonate, titanium dioxide, potassium titanate, silica, silicate, kaolin, chalk, alumina, aluminate, boron nitride and aluminum oxide.

The foamable composition may further include one or more inorganic pigments. Inorganic pigments are added to obtain a selected appearance of the composition by changing the color of reflected or transmitted light as the result of wavelength-selective absorption. Examples of inorganic pigments are titanium dioxide, zinc sulfide, zinc oxide, magnesium oxide, barium sulfate, carbon black, cobalt phosphate, cobalt titanate, cadmium sulfoselenide, cadmium selenide, copper phthalocyanine, ultramarine, ultramarine violet, zinc ferrite, magnesium ferrite, and iron oxides.

The foamable composition may contain from 0.1 to 9 wt.%, from 0.2 to 5 wt.%, or from 0.5 to 2 wt.%, of at least one additive (AD), based on the total weight of the composition. According to one embodiment, in the foamable composition contains from 0.1 to 9 wt. %, from 0.2 to 5 wt. %, or from 0.5 to 3 wt. % of at least one nucleating agent, based on the total weight of the composition.

The foaming process may be a chemical or a physical foaming process. When the foaming process is a chemical foaming process, a chemical foaming agent, in particular a chemical blowing agent, may be used. Chemical foaming agents generally refer to those compositions which decompose or react under the influence of heat in foaming conditions, to generate a foaming gas. Chemical foaming agents can be added to the polymer composition to generate *in situ* the foaming gas. Chemical foaming may also be realized in extrusion devices.

### Thermoplastic Adhesive

In some embodiments, the thermoplastic adhesive film for the bonding purpose disclosed herein is formed from a polymer composition containing at least 80 wt.% (weight percentage) of one or more polysulfone(s) (PSU) having a T_{g} of less than 200°C, for example, at least 85 wt.%, or at least 90 wt.%, or at least 95 wt.%, of PSU based on the total weight of the film. The adhesive film may have a thickness within the range of 25 to 250 microns (µm), for example, within the range of 30 to 220 µm or within the range of 35 to 200 µm.

The preferred polysulfone (PSU) has at least 50 mol.% of the recurring units being the recurring units (R_{PSU}) of formula (U) below: 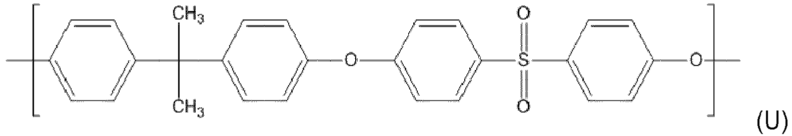 (the mol. % being based on the total number of moles of recurring units in the polymer).

According to an embodiment, at least 60 mol. % (based on the total number of moles of recurring units in the polymer), at least 70 mol. %, at least 80 mol. %, at least 90 mol. %, at least 95 mol. %, at least 99 mol. % or all of the recurring units in the PSU are recurring units (R_{PSU}) of formula (U).

The PSU polymer may be a homopolymer or a copolymer. If the PSU polymer is a copolymer, it can be a random, alternate or block copolymer.

When the polysulfone (PSU) is a copolymer, it can include recurring units (R_{A}), different from and in addition to recurring units (R_{PSU}), such as recurring units of formula (M), (N) and/or (O) :

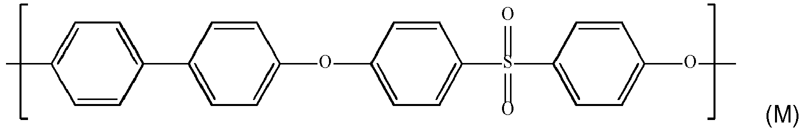

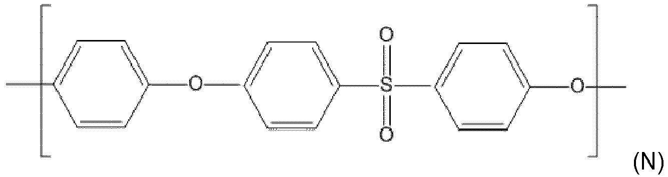

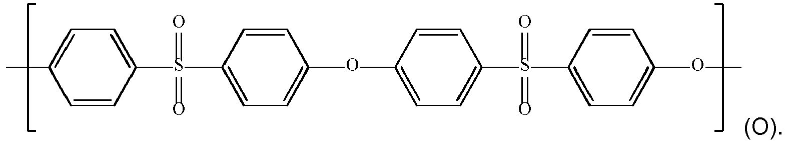

A suitable PSU is that available as Udel® PSU from Solvay Specialty Polymers USA, L.L.C.

In a preferred embodiment, the adhesive film is formed of a PSU polymer in which at least 90 mol. % or all of the recurring units in the PSU polymer are recurring units (R_{PSU}) of formula (U) and which has a T_{g} of about 185°C.

The weight average molecular weight (M_{w}) of PSU may be from 30,000 to 110,000 g/mol, for example, from 40,000 to 100,000 g/mol or from 50,000 to 90,000 g/mol, as determined by GPC as described above.

Polysulfone polymers can be produced by a variety of methods. For example U.S. Pat. Nos. 4,108,837 and 4,175,175 describe the preparation of polyarylethers and in particular polyarylethersulfones. Several one-step and two-step processes are described in these patents, which patents are incorporated herein by reference in their entireties. In these processes, a double alkali metal salt of a dihydric phenol is reacted with a dihalobenzenoid compound in the presence of sulfone or sulfoxide solvents under substantially anhydrous conditions. In a two-step process, a dihydric phenol is first converted, in situ, in the presence of a sulfone or sulfoxide solvent to the alkali metal salt derivative by reaction with an alkali metal or an alkali metal compound. In the case of PSU manufacture, the starting monomers are bisphenol A and a 4,4'-dihalodiphenylsulfone, typically 4,4'-dichlorodiphenylsulfone. The bisphenol A is first converted to the dialkali metal salt derivative by first reacting with a base like sodium hydroxide, NaOH, in a 1:2 stoichiometric molar ratio to produce the disodium salt of bisphenol A. This disodium salt of bisphenol A is then reacted with 4,4'-dichlorodiphenylsulfone in a second step to produce the polymer. Sodium chloride salt is produced as a by-product of the polymerization.

### Composite Layers

In some embodiments, the composite layers in the multilayered composite structure contain reinforcement fibers embedded in a thermoplastic polymer matrix.

As used in the present disclosure, the term "embedded" means fixed firmly and deeply in a surrounding mass, and the term "matrix" means a mass of material, e.g. polymer, in which something is enclosed or embedded.

The thermoplastic polymer matrix includes one or more thermoplastic polymer(s), which may be amorphous or semi-crystalline. The thermoplastic polymer(s), in total, constitutes a majority component of the polymer matrix, i.e., more than 50 wt.%, e.g., 80-100 wt.%, of the polymer matrix is composed of thermoplastic polymer(s). Suitable thermoplastic polymers include, but are not limited to: poly(aryl ether sulfone) (PAES), particularly, polyethersulphone (PES), polyetherethersulphone (PEES), poly(biphenyl ether sulfone) (PPSU); polyamide (PA); polyimide (PI); polyetherimide (PEI); poly(aryl ether ketone) (PAEK) polymers, such as polyetherketoneketone (PEKK), polyetheretherketone (PEEK), polyetherketoneketone (PEKK); polyphthalamide (PPA); thermoplastic polyurethane; poly(methyl methacrylate) (PMMA); polyphenylene sulfide (PPS); polyphenylene oxide (PPO); and copolymers thereof.

Generally, PAES polymers having T_{g} in the range of 201°C to 290°C are suitable for the purpose disclosed herein. In some embodiments, the thermoplastic polymer matrix contains more than 50 wt.%, e.g., 80-100 wt.%, of the PPSU polymer described in reference to the foamed thermoplastic material.

In other embodiments, the composite layers contain reinforcement fibers embedded in a thermoset resin matrix, which hardens upon thermal curing. Preferably, the thermoset resin matrix contains at least one epoxy resin, preferably, a blend of different epoxy resins, and at least one curing agent. The epoxy resin and curing agent, combined, constitute more than 50 wt.%, e.g., 60 wt%-100 wt.%, of the thermoset resin matrix.

Suitable epoxy resins include polyglycidyl derivatives of aromatic diamine, aromatic mono primary amines, aminophenols, polyhydric phenols, polyhydric alcohols, polycarboxylic acids. Examples of suitable epoxy resins include polyglycidyl ethers of the bisphenols such as bisphenol A, bisphenol F, bisphenol C, bisphenol S and bisphenol K; and polyglycidyl ethers of cresol and phenol based novolacs.

Specific examples are tetraglycidyl derivatives of 4,4'-diaminodiphenylmethane (TGDDM), resorcinol diglycidyl ether, triglycidyl-p-aminophenol, triglycidyl-m-aminophenol, bromobisphenol F diglycidyl ether, tetraglycidyl derivatives of diaminodiphenylmethane, trihydroxyphenyl methane triglycidyl ether, polyglycidylether of phenol-formaldehyde novolac, polyglycidylether of o-cresol novolac or tetraglycidyl ether of tetraphenylethane.

Commercially available epoxy resins include N,N,N',N'-tetraglycidyl diamino diphenylmethane (e.g. MY 9663, MY 720, and MY 721 from Huntsman); N,N,N',N'-tetraglycidyl-bis(4-aminophenyl)-1,4-diiso-propylbenzene (e.g. EPON 1071 from Momentive); N,N,N',N'-tetraclycidyl-bis(4-amino-3,5-dimethylphenyl)-1,4-diisopropylbenzene, (e.g. EPON 1072 from Momentive); triglycidyl ethers of p-aminophenol (e.g. MY 0510 from Hunstman); triglycidyl ethers of m-aminophenol (e.g. MY 0610 from Hunstman); diglycidyl ethers of bisphenol A based materials such as 2,2-bis(4,4'-dihydroxy phenyl) propane (e.g. DER 661 from Dow, or EPON 828 from Momentive, and Novolac resins preferably of viscosity 8-20 Pa·s at 25°C; glycidyl ethers of phenol Novolac resins (e.g. DEN 431 or DEN 438 from Dow); di-cyclopentadiene-based phenolic novolac (e.g. Tactix 556 from Huntsman); diglycidyl 1,2-phthalate (e.g. GLY CEL A-100); diglycidyl derivative of dihydroxy diphenyl methane (Bisphenol F) (e.g. PY 306 from Huntsman). Other suitable epoxy resins include cycloaliphatics such as 3',4'-epoxycyclohexyl-3,4-epoxycyclohexane carboxylate (e.g. CY 179 from Huntsman).

The curing agent is suitably selected from known curing agents, for example, aromatic or aliphatic amines, or guanidine derivatives. Particular examples are 3,3'- and 4-,4'-diaminodiphenylsulphone (DDS); methylenedianiline; bis(4-amino-3,5-dimethylphenyl)-1,4-diisopropylbenzene; bis(4-aminophenyl)-1,4-diisopropylbenzene; 4,4'methylenebis-(2,6-diethyl)-aniline (MDEA from Lonza); 4,4'methylenebis-(3-chloro, 2,6-diethyl)-aniline (MCDEA from Lonza); 4,4'methylenebis-(2,6-diisopropyl)-aniline (M-DIPA from Lonza); 3,5-diethyl toluene-2,4/2,6-diamine (D-ETDA 80 from Lonza); 4,4'methylenebis-(2-isopropyl-6-methyl)-aniline (M-MIPA from Lonza); 4-chlorophenyl-N,N-dimethyl-urea (e.g. Monuron); 3,4-dichlorophenyl-N,N-dimethyl-urea (e.g. DIURON TM) and dicyanodiamide (e.g. AMICURE TM CG 1200 from Pacific Anchor Chemical).

The thermoset resin matrix may further contain other additives such as catalysts, co-monomers, rheology control agents, tackifiers, inorganic or organic fillers, thermoplastic and/or elastomeric polymers as toughening agents, core-shell rubber particles, UV stabilizers/additives, viscosity modifiers/flow control agents, stabilizers, inhibitors, pigments, dyes, flame retardants, reactive diluents, and other additives well known to those skilled in the art for modifying the properties of the matrix resin before or after curing.

Suitable toughening agents for the thermoset resin matrix include, but are not limited to, homopolymers or copolymers either alone or in combination of polyamides, copolyamides, polyimides, aramids, polyketones, polyetherimides (PEI), polyetherketones (PEK), polyetherketoneketone (PEKK), polyetheretherketones (PEEK), polyethersulfones (PES), polyetherethersulfones (PEES), polyesters, polyurethanes, polysulphones, polysulphides, polyphenylene oxide (PPO) and modified PPO, poly(ethylene oxide) (PEO) and polypropylene oxide, polystyrenes, polybutadienes, polyacrylates, polymethacrylates, polyacrylics, polyphenylsulfone, high performance hydrocarbon polymers, liquid crystal polymers, elastomers and segmented elastomers.

If thermoplastic or elastomeric toughening agent is added, such component is present in an amount of less than 20 wt%, based on the total weight of the thermoset resin matrix.

The thermoset resin matrix may also include, by way of example, ceramic microspheres and various flame retardants and smoke suppressants to impart specific flame retardant properties. Examples of such suppressants are metal oxide, alumina trihydrate (ATH), zinc borate such as Firebrake® ZB (commercially available from U.S. Borax Inc., Boron, California USA), ammonium polyphosphate, polyphosphazenes, phosphorous-modified epoxy. If present, the amount of the above mentioned additives may be up to 35 wt.% based on total weight of the resin matrix.

The reinforcement fibers of the composite layer may in the form of chopped or continuous fibers, tows composed of multiple filaments, continuous unidirectional fibers, nonwoven mat/veil of randomly oriented fibers, woven or nonwoven fabrics. Nonwoven fabrics include non-crimped fabric that contains unidirectional fibers held in place by stitching. The term "unidirectional" as used herein means aligning in parallel in the same direction.

Reinforcement fibers include carbon or graphite fibers, glass fibers and fibers formed of silicon carbide, alumina, boron, quartz, and ceramics, as well as fibers formed of polymers such as for example polyolefins, poly(benzothiazole), poly(benzimidazole), polyarylates, poly(benzoxazole), aromatic polyamides, polyaryl ethers and the like, and may include mixtures having two or more such fibers. In some embodiments, the fibers are selected from glass fibers, carbon fibers and aromatic polyamide fibers, such as fibers sold under the trade name KEVLAR.

Each composite layer may contain 30 wt.% to 60 wt.%, or 35 wt% to 50 wt.%, of thermoplastic polymer or thermoset resin matrix based on the total weight of the composite layer. The total areal weight of each composite layer may be in the range of 200 gsm (g/m²) to 2000 gsm, in some preferred embodiments, 450 gsm to 600 gsm.

### Manufacturing Method

The components of the multilayered composite structure disclosed herein are assembled and consolidated by applying heat and pressure to produce a bonded structure. Any conventional means for applying heat and pressure, such as heated platens or heated rollers, may be used. In preferred embodiments, consolidation of the multilayered composite structure is carried out by passing the structure through a double-belt press.

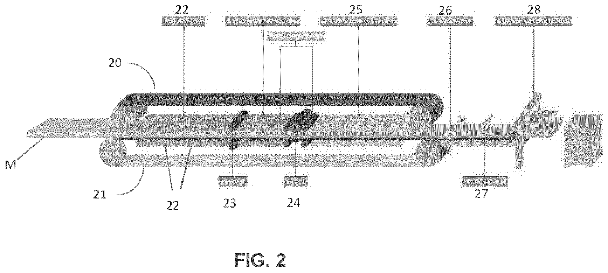

**FIG. 2** shows an example of a continuous processing machine having a double-belt press that is suitable for consolidating an assembly of foam core, adhesive films, and outer skins to form an integrated panel. Referring to FIG. 2, the processing machine includes an upper endless belt 20, a lower endless belt 21, a plurality of heating elements 22 in a heating zone, nip rolls 23 for regulating the distance, S-rolls 24 for regulating the final shape, a plurality of cooling elements 25 in a cooling zone, an edge trimmer 26 downstream from the cooling zone, an optional cross-section cutter 27 and an optional stacking mechanism 28. The endless belts are revolve in opposing directions with mutually facing sides thereof pressed against each other and against the material (M) passing between the belts. The heating and cooling elements are located adjacent to the portions of the belts that will be in contact with the material passing between the belts. One advantage of this type of double-belt press system is that consolidation of the foam core sandwich structure can be carried out at low pressure, e.g. less than 2 bars, thereby avoiding distortion or collapse of the foam core. The endless belts may be made of a non-stick, elastic material such as PTFE or a high temperature resistant and non-stick stainless steel. In a preferred example, a double-belt press with non-stick stainless steel belts is used to provide improved sandwich surface finishing.

In a preferred embodiment, the manufacturing of the multilayered composite structure is carried out in a continuous isochoric method, which includes:
(a) forming a multilayered assembly having at least the following components: a thermoplastic foam core having two opposing surfaces; a thermoplastic adhesive film on one or both of the opposing surfaces of the thermoplastic foam core; one or more layer(s) of fiber-reinforced composite material on each thermoplastic adhesive film;
(b) passing the assembly between two endless belts of a double belt press at a line speed of 0.5 to 5 m/min, wherein the distance between the endless belts is in the range from 3 mm to 40 mm and 1 mm to 10mm lower than the combined thickness of the assembly at (a) before its passage through the double belt press.
(c) heating the sandwich structure to a temperature in the range of 200°C to 260°C during its passage through the double belt press for a time period of 1 to 10 minutes.

The thermoplastic foam core, the thermoplastic adhesive film, and the composite layers are as described above.

The multilayered assembly may be put together just ahead of the entry to the double belt press by unwinding a continuous sheet of composite material from a supply roller and placing it on a conveyor. Additional sheet(s) of composite material may be supplied by additional supply roller(s) and placed onto the prior laid sheet of composite material. Then a thermoplastic foam core in sheet form having an adhesive film thereon is placed onto the sheet of composite material such that the adhesive film is in contact with the sheet of composite material. To form the second outer skin of composite materials, one or more upper sheets of composite material, unwound from additional supply roller(s), is/are placed on top of the foam core sheet. In such case, the foam core sheet has an adhesive film previously applied on each of its upper and lower surfaces.

In one embodiment, the continuous isochoric method is equipped with a Roller Carpet Module (RCM) for fine and distributed control of the thickness through all the length and width of the materials. The RCM includes several small rolls both on the top and on the bottom, in contact with a continuous steel belt that provide a very homogeneous thickness control through the whole width of the steel belt. In another embodiment, the continuous isochoric method is further equipped with a Calender Module (CAM), which includes an upper and a lower calendar rolls that can apply a stronger pressure on the steel belt, for the control of the thickness of materials with high pressure resistance through all the length and width of the materials. In one preferred embodiment, the continuous isochoric method is applied by a machine equipped with a Roller Carpet Module (RCM) for a better accurate control of the foam and then the sandwich thickness.

In another embodiment, the manufacturing of the multilayered composite structure is carried out in a continuous isobaric method, which includes:
(a) forming a multilayered assembly having at least the following components: a thermoplastic foam core having two opposing surfaces; a thermoplastic adhesive film on one or both of the opposing surfaces of the thermoplastic foam core; one or more composite layer(s) of fiber-reinforced composite material on each thermoplastic adhesive film;
(b) passing the assembly between two endless belts of a double belt press at a line speed of 0.5 to 5 m/min under a positive pressure of less than 5 bar, for example, from 1 to 2 bar; and
(c) heating the assembly to a temperature in the range of 200°C to 260°C during its passage through the double belt press for a time period of 1 to 10 minutes.

The thermoplastic foam core, the thermoplastic adhesive film, and the composite layers are as described above.

### EXAMPLES

### Example 1

### Control panel with un-reinforced thermoplastic skins via isochoric process

A sandwich panel having a Tegracore® foam core with 17.5 mm thickness, two PPSU R-5100 resin film layers (each having a thickness of 63 µm) as the top and bottom skins, and an adhesive film of about 70gsm of Bostik SPA145FR-A Sharnet® between each skin and the foam core was assembled. Bostik SPA145FR-A Sharnet® is a flame retardant Polyester web adhesive. Tegracore® is a PPSU-based thermoplastic foam core with closed cells having a density of 53 Kg/m³.

The assembled panel was passed through a double-belt continuous machine having a two opposing endless PTFE belts and a heating process zone of 12 linear meters. The bonding and consolidation of the assembled sandwich panel was carried out by setting the temperature in the heating zone at 220°C and using a line speed of 1 m/min. The distance between the two opposing endless belts was equal to 11.8 mm.

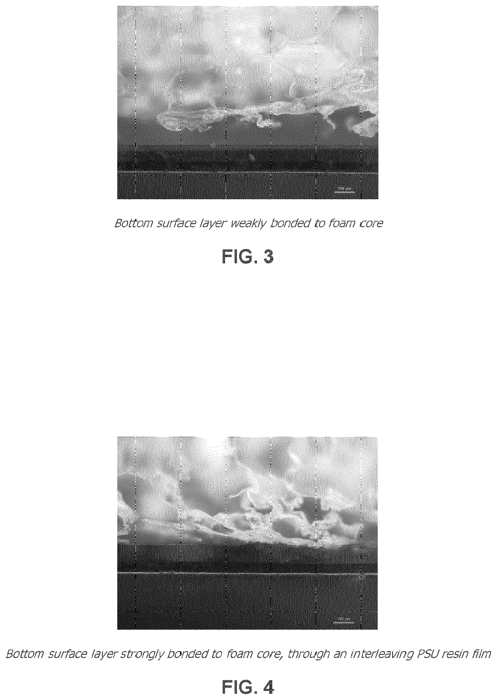

A cross-section of the resulting consolidated sandwich panel is shown in FIG. 3, a polished image of the skin/core interface taken at x100 magnification in dark field light. The panel showed a weak bonding line between the foam core and the PPSU outer skin layers and it debonded easily during the cutting operations.

Coupons of the consolidated sandwich panel were subjected to a Climb Drum Peeling test according to EN 2243-3, tension applied at 25 mm/min. The test results showed an average peel strength of lower than 10N/75 mm.

### Example 2

### Panel with un-reinforced thermoplastic skins via isochoric process

Two sandwich panels were assembled as for Example 1, but using a 100 µm PSU resin film as the adhesive film between the foam core and each of the two PPSU skin layers.

Each sandwich panel was passed through the double-belt continuous machine of Example 1 with the heating temperature set at 220°C in one case, and at 250°C in the second case, and in both cases using a line speed of 1 m/min. In both cases, the distance between the two opposing endless belts was equal to 11.8 mm.

Both resulting consolidated sandwich panels showed a good bonding between the thermoplastic film adhesives and the core as can be seen from FIG. 4, a polished image of the core/skin interface taken at x100 magnification in dark field light.

Coupons of the consolidated sandwich panels were subjected to the Climb Drum Peeling test according to EN 2243-3, tension at 25 mm/min. The test results showed an average peeling strength of 260N/75 mm for the sandwich manufactured at 220°C and 344N/75 mm for the sandwich manufactured at 250°C, respectively. These values are significantly greater than the peel strength values obtained for the control sandwich panel of Example 1, in which Bostik SPA145FR-A Sharnet® Polyester was used as the adhesive film.

### Example 3

### Panels with un-reinforced thermoplastic skins via isobaric process

Two sandwich panels similar to those described in Example 2 were assembled and passed through a double-belt continuous machine, having a two opposing endless stainless steel belts and a heating process zone of 8 linear meters. The machine applies two (2) bar of absolute pressure through the entire heating process zone of 8 linear meters and the following cooling.

The first panel was manufactured by setting the heating temperature at 205°C and using line speed of 1.5 m/min. The second panel was manufactured by setting the heating temperature at 230°C and using line speed of 0.5 m/min.

The resulting consolidated panels showed a good bonding line between the foam core and the PPSU skin layers.

Coupons of the consolidated sandwich panels were subjected to the Climb Drum Peeling test according to EN 2243-3, tension at 25 mm/min. The test results showed an average peel strength was 250N/75 mm for the sandwich manufactured at 205°C and line speed of 1.5 m/min and 260N/75 mm for the sandwich manufactured at 230°C and line speed of 0.5 m/min. These peel strength values are significantly greater than the values obtained for the control sandwich panel of Example 1.

### Example 4

### Panels with thermoset skins

A sandwich panel was assembled to have a Tegracore® foam core (12 mm thickness), two thermoset skins, and a 100 µm PSU resin film between each thermoset skin and the foam core. Each thermoset skin having 2 plies of MTM348FR-7781-38% RC on each side; MTM348FR-7781-38% RC is a prepreg supplied by Solvay with a resin content of 38% by weight, containing MTM348FR fire retardant epoxy resin system and 7781 E-glass fabric.

The assembled sandwich panel was passed through the double-belt continuous machine of Example 1 with the heating temperature set at 175°C and using a line speed of 0.5 m/min. Said temperature and time provided full cure of the thermoset skins.

The resulting cured sandwich panel showed a good bonding line between the thermoset skins and the thermoplastic film adhesives as well as good bonding between the thermoplastic film adhesives and the foam core.

Coupons of the consolidated sandwich panels were subjected to the Climb Drum Peeling test according to EN 2243-3, tension at 25 mm/min. The test results showed an average peel strength of **314 N/75 mm.**

### Example 5

### Sandwich panel with glass fabric reinforced thermoplastic skins via isochoric process

A sandwich panel was assembled from a Tegracore® foam core (12 mm thickness), two fiber-reinforced thermoplastic skins, and a 100 µm PSU adhesive film between each thermoplastic skin and the foam core. Each thermoplastic skin, as a continuous sheet, was manufactured by pressing a continuous 7781 e-glass fabric into a continuous PPSU polymer film layer so that the fabric is embedded in the polymer layer. Each thermoplastic skin has a polymer content of about 40% by weight.

The double-belt continuous machine disclosed in Example 1 was used for consolidating the sandwich panel. The heating temperature was set at 250°C, the line speed was 1 m/min, and distance between the opposing endless belts was 12.5 mm.

The resulting consolidated panel showed a good bonding line between the fiber-reinforced thermoplastic skins and the adhesive films as well as good bonding between the adhesive films and the foam core.

Coupons of the consolidated sandwich panels were subjected to the Climb Drum Peeling test according to EN 2243-3, tension at 25 mm/min. The test results showed an average peel strength of 408 N/ 75 mm.

### Example 6

### Sandwich with glass fabric reinforced thermoplastic skins via isochoric process

A sandwich panel similar to the one in Example 5 was assembled, but consolidation was carried out by passing the assembled panel through a machine equipped with a Roller Carpet Module (RCM) for controlling the thickness of the foam and of the sandwich through all the length and width of the materials. A temperature of 250°C was used for simultaneously obtain a good glass fabric impregnation and adhesion of the PPSU-based skins with the adjacent PSU adhesive films.

Coupons of the consolidated sandwich panels were subjected to the Climb Drum Peeling test according to EN 2243-3, tension at 25 mm/min. The test results showed an average peel strength of 360 N/ 75 mm.

## Claims

1. A sandwich structure comprising:
a thermoplastic foam core having two opposing surfaces,
a first thermoplastic adhesive film on one of the opposing surfaces of the thermoplastic foam core;
a first composite layer adhered to the first thermoplastic adhesive film,
wherein
the first composite layer comprises reinforcing fibers embedded in a polymer or resin matrix,
the thermoplastic foam core is formed of a foamed thermoplastic material having a glass transition temperature (T_{g}) of at least 200°C, preferably, 210 °C to 240 °C, as determined by Differential Scanning Calorimetry (DSC) at a heating rate of 5°C/min, preferably, the thermoplastic foam core is void of any reinforcement fibers, such as carbon, glass and polymeric fibers, and
the thermoplastic adhesive film is formed of a thermoplastic polymer composition having a T_{g} of at least 20°C lower than the T_{g} of the foamed thermoplastic material.

2. The sandwich structure of claim 1, further comprising a second adhesive film on the other opposing surface of the thermoplastic foam core and a second composite layer adhered to the second adhesive film, wherein the second adhesive film is formed of a thermoplastic polymer composition having a T_{g} of at least 20°C lower than the T_{g} of the foamed thermoplastic material.

3. The sandwich structure of claim 1 or 2, wherein the foam core is formed from a foamable composition comprising one or more thermoplastic polymers selected from: poly(aryl ether sulfone) (PAES), particularly, polyethersulphone (PES), polyetherethersulphone (PEES), poly(biphenyl ether sulfone) (PPSU); polyamide (PA); polyimide (PI); polyetherimide (PEI); and copolymers thereof.

4. The sandwich structure of claim 1, wherein the foamable composition comprises a poly(biphenyl ether sulfone) polymer (PPSU) containing at least 50 mol.% of recurring units (R_{PPSU}) of formula (K) below, the mol.% being based on the total number of moles in the polymer: 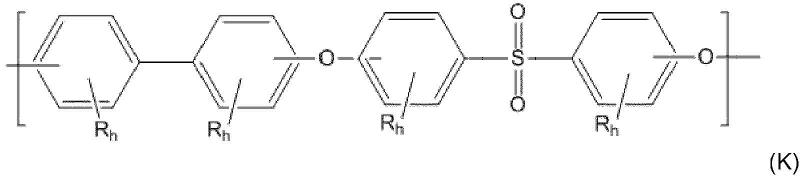 where
R, at each location, is independently selected from the group consisting of a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and
h, for each R, is independently zero or an integer ranging from 1 to 4 (for example 1, 2, 3 or 4).

5. The composite sandwich structure of claim 1, wherein the foamed thermoplastic material of the foam core has a T_{g} in the range of 210°C-240°C and is formed from a foamable composition comprising at least 80 wt.% of a PPSU polymer, based on the total weight of the composition, said PPSU polymer comprising at least 50 mol.% of recurring units (R_{PPSU}) of formula (L) below, the mol.% being based on the total number of moles in the polymer: 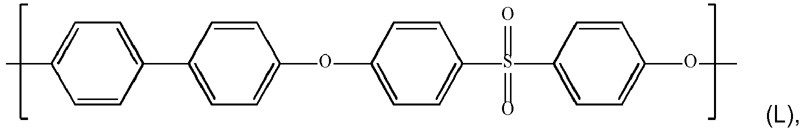 preferably, the PPSU polymer has a weight average molecular weight (Mw) in the range of 30,000 to 90,000 g/mol, optionally, from 40,000 to 80,000 g/mol or from 50,000 to 70,000 g/mol.

6. The sandwich structure according to any one of the preceding claims, wherein the first thermoplastic adhesive film is formed from a polymer composition comprising 80%-100% by weight of one or more polysulfone(s), and having a T_{g} of less than 200°C, preferably, said polysulfone (PSU) having at least 50 mol.% of the recurring units (R_{PSU}) of formula (U) below: 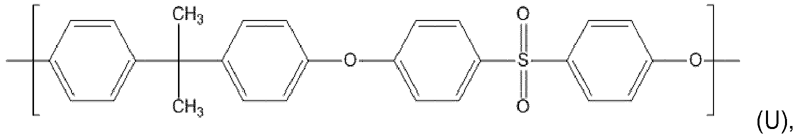 the mol. % being based on the total number of moles of recurring units in the polymer, preferably, the PSU having a weight average molecular weight (M_{w}) in the range of 30,000 to 110,000 g/mol, optionally, from 40,000 to 100,000 g/mol or from 50,000 to 90,000 g/mol.

7. The sandwich structure according to any one of the preceding claims, wherein the first composite layer comprises reinforcing fibers embedded in a thermoplastic polymer matrix, preferably, said thermoplastic polymer matrix comprising an amorphous thermoplastic material having a T_{g} in the range of 210°C to 240°C.

8. The composite sandwich structure according to any one of claims 1 to 6, wherein the first composite layer comprises reinforcing fibers embedded in a curable resin matrix, which comprises one or more epoxy resins and at least one curing agent.

9. The sandwich structure according to any one of the preceding claims, wherein the total amount of the polymer or resin matrix in the first composite layer is 30%-60%, preferably, 35%-50%, in weight based on the total weight of the composite layer.

10. The sandwich structure according to any one of the preceding claims, wherein the reinforcement fibers in the first composite layer comprise continuous unidirectional fibers or a woven fabric or a nonwoven veil/mat of randomly arranged fibers or chopped fibers.

11. The sandwich structure according to any one of the preceding claims, wherein the reinforcement fibers in the first composite layer are selected from: carbon fibers, glass fibers, polymeric fibers, fibers formed of silicon carbide, alumina, boron, quartz, and combinations thereof.

12. The sandwich structure according to any one of claims 2 to 11, wherein the second composite layer is the same in composition as the first composite layer.

13. The sandwich structure according to any one of the preceding claims, further comprising one or more additional composite layer(s) over the first composite layer, each additional composite layer comprising reinforcing fibers embedded in a polymer or resin matrix.

14. The sandwich structure according to any one of the preceding claims, wherein
the foam core has a density in the range of 45 Kg/m³ to 150 Kg/m³ as measured by ASTM D1622, and a thickness in the range of 3 mm to 30 mm,
the first adhesive film has an areal weight within the range of 25 to 250 microns (µm), and
the first composite layer has an areal weight in the range of 200 to 2000 gsm, in some embodiments, 450 to 600 gsm.

15. A continuous isobaric method for fabricating a sandwich structure, said method comprising:
(a) forming a multilayered assembly having at least the following components: a thermoplastic foam core having two opposing surfaces; a thermoplastic adhesive film on one or both of the opposing surfaces of the thermoplastic foam core; one or more layer(s) of fiber-reinforced composite material on each thermoplastic adhesive film, wherein the thermoplastic foam is formed of a foamed thermoplastic material having a glass transition temperature (T_{g}) of at least 200°C, preferably 210°C to 240°C, as determined by Differential Scanning Calorimetry (DSC) at a heating rate of 5°C/min;
(b) passing the multilayered assembly between two endless belts of a double belt press at a line speed of 0.5 to 5 m/min under a positive pressure of less than 5 bar, optionally 1 to 2 bar; and
(e) heating the sandwich structure to a temperature of from 200°C to 260°C during its passage through the double belt press for a time period of 1 to 10 minutes.

16. A continuous isochoric method for fabricating a sandwich structure, said method comprising:
(a) forming a multilayered assembly having at least the following components: a thermoplastic foam core having two opposing surfaces; a thermoplastic adhesive film on one or both of the opposing surfaces of the thermoplastic foam core; one or more layer(s) of fiber-reinforced composite material on each thermoplastic adhesive film, wherein the thermoplastic foam is formed of a foamed thermoplastic material having a glass transition temperature (T_{g}) of at least 200°C, preferably 210 to 240°C, as determined by Differential Scanning Calorimetry (DSC) at a heating rate of 5°C/min;
(b) passing the multilayered assembly between two endless belts of a double belt press at a line speed of 0.5 to 5 m/min, wherein the distance between the endless belts is in the range from 3 mm to 40 mm and from 1mm to 10mm lower than the combined thickness of the multilayered assembly at (a) before passing through the double belt press; and
(c) heating the multilayered assembly to a temperature of from 200°C to 260°C during its passage through the double belt press for a time period of 1 to 10 minutes.
